# EUROPEAN PATENT APPLICATION

(11) **EP 3 477 969 A1**
(43) Date of publication of application: **01.05.2019**
(21) Application number: 17306484.1
(22) Date of filing: 30.10.2017
(51) Int. Cl.: H04W 4/00, H04L 29/08

(54) **COMMUNICATION AMONG INTERNET OF THINGS (IOT) ENABLED VEHICLES**

(71) Applicant: THOMSON LICENSING, 92130 Issy les Moulineaux (FR)
(72) Inventor: MS, Zameerun, 620008 Tiruchirappalli (IN)
(74) Representative: Vidon Brevets & Stratégie

(57) **Abstract**

A method and apparatus are described including receiving a short range broadcast communication message by a first Internet of Things (IoT) enabled vehicle from a user in a second IoT enabled vehicle and determining a message type of the short range broadcast communication message. Also described are a method and apparatus including generating a short range multicast communication message by an IoT enabled vehicle and transmitting the generated short range multicast communication message to at least one other IoT enabled vehicle or a gateway.

## Description

### FIELD

The present invention is directed to communication among internet of things (IoT) enabled vehicles.

### BACKGROUND

In multicast and broadcast applications, data are transmitted from a server to multiple receivers over wired and/or wireless networks. A multicast system as used herein is a system in which a server transmits the same data to multiple receivers simultaneously, where the receivers form a subset of all the receivers up to and including all of the receivers. A broadcast system is a system in which a server transmits the same data to all of the receivers simultaneously. That is, a multicast system by definition can include a broadcast system.

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Many of the devices that are encountered in daily lives are able to be converted into devices that work with zero or minimal human intervention in the near future. IoT (Internet of Things) refers to a network of devices, vehicles and other items including any of electronics, software sensors, actuators etc. with network connectivity enabling data to be collected and/or exchanged. IoT plays a major role in converting conventional devices to IoT devices. In the future, almost all devices will come under the umbrella and considered IoT devices including both personal passenger and commercial vehicles. The proposed method and apparatus is directed to the field of IoT enabled vehicles.

IoT enabled devices communicate with gateway devices to transmit data that are being collected by the IoT enabled devices. Gateway devices include but are not limited to home and commercial gateway devices, routers, bridges and brouters. Conventional IoT enabled devices seldom communicate between themselves. Communication between IoT devices may give rise to numerous new applications as well as new problems.

Conventional IoT known solutions regarding communications of IoT enabled devices have concentrated on controlling traffic signals and reducing traffic congestion with infrastructure devices (e.g., gateways) and IoT enabled vehicles.

### SUMMARY

The proposed method and apparatus is directed to communication between IoT enabled vehicles or between IoT enabled vehicles and a gateway device. The proposed method and apparatus is directed to communication between IoT enabled vehicles using short range multicast (broadcast) communication techniques such as Bluetooth, Zigbee, RF4CE, WiFi, Wimax, DigiMesh, Zwave, Lora, Thread, NarrowBand-Internet of Things (NB-IOT) or 6LoWPAN and the like to communicate among themselves. ZigBee is an IEEE 802.15.4-based specification for a suite of high-level communication protocols used to create personal area networks with small, low-power digital radios. 6LoWPAN is an acronym for *IPv6 over Low power Wireless Personal Area Networks.* RF4CE is a ZigBee application profile. Thread is an Internet of Things (IoT) home automation protocol. NarrowBand IoT is a Low Power Wide Area Network (LPWAN) radio technology standard that has been developed to enable a wide range of devices and services to be connected using cellular telecommunications bands. Wi-Fi or WiFi is a technology for wireless local area networking among devices based on IEEE 802.11 suite of standards. WiMAX (Worldwide Interoperability for Microwave Access) is a family of wireless communication standards based on the IEEE 802.16 set of standards, which provide multiple physical layer (PHY) and Media Access Control (MAC) options. DigiMesh is a proprietary peer-to-peer wireless networking topology developed by Digi International. The protocol allows for time synchronized sleeping nodes/routers and low-power battery powered operation. The protocol is currently supported by several 900 MHz and 2.4 GHz radio modules from Digi International.

Vehicles are an integral part of daily life. It is impossible to imagine today all of the information that IoT enabled vehicles could carry and provide to other IoT enabled vehicles and/or gateways. IoT enabled vehicles collect data as instructed by drivers or passengers or pre-programmed by owners. Currently, IoT enabled vehicles can collect operational data and provide that to the manufacturer or dealer in order to prompt the owner to schedule maintenance. IoT enabled vehicles currently also collect data on operation of the vehicle. This is an aid to parents monitoring operation of the vehicle by minors. IoT enabled vehicles are also currently able to collect and provide data on operation of the vehicle to automobile insurance companies in order to more appropriately set automobile insurance rates. The proposed method and apparatus provides mechanisms either initiated by humans or automated during normal circumstances.

In a first aspect, a method is described including receiving a short range broadcast communication message by a first Internet of Things (IoT) enabled vehicle from a user in a second IoT enabled vehicle and determining a message type of said short range broadcast communication message.

In an embodiment, the method further includes transmitting a response if the short range broadcast communication message is a request for audio/video if the audio/video is available or ignoring the short range broadcast communication message if the audio/video is unavailable.

In an embodiment, the method further includes filtering the short range broadcast communication message if the message type is advertising and displaying the short range broadcast communication message responsive to results of the filtering, wherein the filtering is performed responsive to user preferences stored in a user profile.

In an embodiment, the method further includes determining if a vehicle identifier in the short range broadcast communication message matches a vehicle identifier of the first vehicle, determining if the message type is mishap and displaying the short range broadcast communication message responsive to the second and the third determinations.

In another aspect, a method is described including generating a short range multicast communication message by an IoT enabled vehicle and transmitting the generated short range multicast communication message to at least one other IoT enabled vehicle or a gateway.

In an embodiment, generating the short range multicast communication message includes generating a text message, generating a voice message or generating a voice to text message.

In an embodiment, the short range multicast communication message is one of a request for audio or video content, advertising or a mishap type.

In an embodiment, the transmission of the short range multicast communication message is a short range broadcast communication.

In an embodiment, the method further includes receiving a response to the generated short range multicast communication message, the response being the audio/video content.

In another aspect, an apparatus is described including means for receiving a short range broadcast communication message by a first Internet of Things (IoT) enabled vehicle from a user in a second IoT enabled vehicle and means for determining a message type of said short range broadcast communication message.

In an embodiment, the apparatus further includes means for transmitting a response if the message is a request for audio/video if the audio/video is available or ignoring the message if the audio/video is unavailable.

In an embodiment, the apparatus further includes means for filtering the short range broadcast communication message if the message type is advertising and displaying the message responsive to results of the filtering, wherein the filtering is performed responsive to user preferences stored in a user profile.

In an embodiment, the apparatus further includes means for determining if a vehicle identifier in the short range broadcast communication message matches a vehicle identifier of the first vehicle, means for determining if the message type is mishap and means for displaying the short range broadcast communication message responsive to the second and the third determinations.

In another aspect, an apparatus is described including means for generating a short range multicast communication message by a vehicle and means for transmitting the generated short range broadcast communication message to at least one other vehicle or a gateway.

In an embodiment, the means for generating the short range multicast communications message includes generating a text message, generating a voice message or generating a voice to text message.

In an embodiment, the short range multicast communication message is one of a request for audio or video content, advertising or a mishap type.

In an embodiment, the transmission of the short range multicast communication message is a short range broadcast communication.

In an embodiment, the apparatus further includes means for receiving a response to the generated short range multicast communication message, the response being the audio/video content.

### BRIEF DESCRIPTION OF THE DRAWINGS

The proposed method and apparatus is best understood from the following detailed description when read in conjunction with the accompanying drawings. The drawings include the following figures briefly described below:
Fig. 1 is a flowchart of an exemplary embodiment of the receive side (IoT enabled vehicle receiving a message) in accordance with the principles of the proposed mechanism.
Fig. 2 is a flowchart of an exemplary embodiment of the transmit side (IoT enabled vehicle generating and transmitting an initial message) in accordance with the principles of the proposed mechanism.
Fig. 3 is a block diagram of an exemplary embodiment of a network access device 300 for practicing the proposed method.

It should be understood that the drawing(s) are for purposes of illustrating the concepts of the disclosure and are not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

In the following scenarios, the communication from the originator (or request) is a simple text message. The reply could be plain text or file transfer or any other reasonable response.

A driver or passenger of a first IoT enabled vehicle can request for a specific piece of music or specific video content from any passing vehicles. Typically, a driver would not view video content while driving, however, many of today's vehicles, especially mini-vans, sport utility vehicles and station wagons have display screens for entertaining children in the back seat of the vehicle. A second IoT enabled vehicle that is able to satisfy the request can respond with the audio or video file. This can also be accomplished by file transfer along with normal message communication.

While operating vehicles, the driver or passenger might sometimes want to listen to certain music or an album, which the driver or passenger may not have available in the vehicle. In such cases, an IoT enabled vehicle can broadcast a message requesting a particular piece of music or a music album or video content for display on a display screen for children in a back seat. The broadcast message can be received by any passing vehicles and the passing IoT enabled vehicles, having the requested content, can respond by providing the requested content or by providing the requested content and sending a message.

A driver or preferably a passenger in an IoT enabled vehicle generates a message including a search string identifying the desired audio or video content. Message generation may be by typing text onto a display screen such as a navigation display of the IoT vehicle or by a voice to text conversion program. An application (app) running in the IoT enabled vehicle begins broadcasting the generated request message. If a passing IoT enabled vehicle receives the broadcast request message, then the passing IoT enabled vehicle performs an internal search to see if the requested audio or video content is available. The content may be available since the requested content might be on a CD or DVD in the passing IoT enabled vehicles CD or DVD players. The driver or passengers of the passing IoT enabled vehicle may have pre-programmed the IoT enabled vehicle to filter or ignore such requests.

In an alternative embodiment, an IoT enabled vehicle can also communicate with a second IoT enabled vehicle for forwarding advertisements. The second IoT enabled vehicle has the option of accepting the advertisements or not. A user of the second IoT enabled vehicle may have set up a filter so that messages such as advertisements will not be accepted. The filter may be set up to filter out all advertisements or the filter may be set to filter out some advertisements and to accept other advertisements. The above is described in terms of a single second IoT enabled vehicle but it should be obvious that such messages are usually broadcast so that many other IoT enabled vehicles receive the advertisements. Such a broadcasting (transmission, forwarding, multicasting) is performed using the short range broadcast technologies described above. The advertisement may be a text message that can be displayed on a navigation type display screen in the IoT enabled vehicle or it may be an audio or video message. Many states have laws in place regarding hands free use of cell phones and a text message may distract the driver. It is possible that the advertisement is audio and can be passed through the vehicle's radio or hands free cell phone system. Any video message should not be rendered unless it is directed to and through a display screen in the back seat for rendering to back seat passengers who are usually children. The genre of the advertisement is included in the message and are predefined so that the user can set up filters in advance. The user is also able to set up the filters to refuse certain advertising formats, such as accepting an audio only format. It should be noted that the advertisement may or may not be an advertisement in the commercial sense. The advertisement may be of an event by the user of the first IoT enabled vehicle, such as a "come one come all see or participate in the beach volley ball games tonight at the Ocean City beach".

Any user can generate an advertisement and broadcast the advertisement to all the nearby IoT enabled vehicles. The genre of the advertisement is in the header of the advertisement. The advertisement can be a text message entered by a keypad such as a navigation screen or a cell phone in Bluetooth communication with the vehicles IoT system or the advertisement may be an audio advertisement which may be generated using a cell phone in Bluetooth communication with the vehicle's IoT system or the advertisement may be a photo or video clip, with or without audio, generated using a cell phone in Bluetooth communication with the vehicle's IoT system.

Any receiving IoT enabled vehicle may have settings for filtering the type (genre) and/or format of advertisements that may be received. The advertisement can be seen or heard or rendered in the receiving vehicle responsive to the filters applied to the advertisements.

While driving, the user (driver or passengers) of an IoT enabled vehicle might notice unusual conditions of other vehicles on the road, such as, but not limited to fuel tank lid left open, smoke coming out of the passing vehicle, tire wobbling, exhaust dragging on the roadway and sparking, damage on a nearby vehicle. All the above conditions can be easily communicated between IoT enabled vehicles and addresses before a major mishap occurs.

The proposed method and apparatus has predefined mishap codes for each of the predefined mishap that could happen to a vehicle. On occurrence of this the user shall manually trigger one of the mishap code to be communicated the IoT service in the user's vehicle to the vehicle exhibiting the mishap when the vehicle exhibiting the mishap is IoT enabled.

A user (driver or passengers of an IoT enabled vehicle) observes a mishap in a passing vehicle. The user selects one of the predefined mishaps. This may be accomplished using a display screen such as a navigation screen or voice to text conversion. The message generated by the user of the IoT enabled vehicle concerning the mishap is broadcast to vehicles within the range of the short range broadcast communication system and includes the vehicle license plate number of the vehicle exhibiting the mishap. The message is parsed by all vehicles receiving the message and is shown to the driver of the vehicle only if the vehicle identifier, such as a vehicle license plate number, matches. As used herein, shown may be a text message or an audio message. An audio message being preferable as some jurisdictions require hands free operation of communication devices including laws that prohibit texting while operating a moving vehicle.

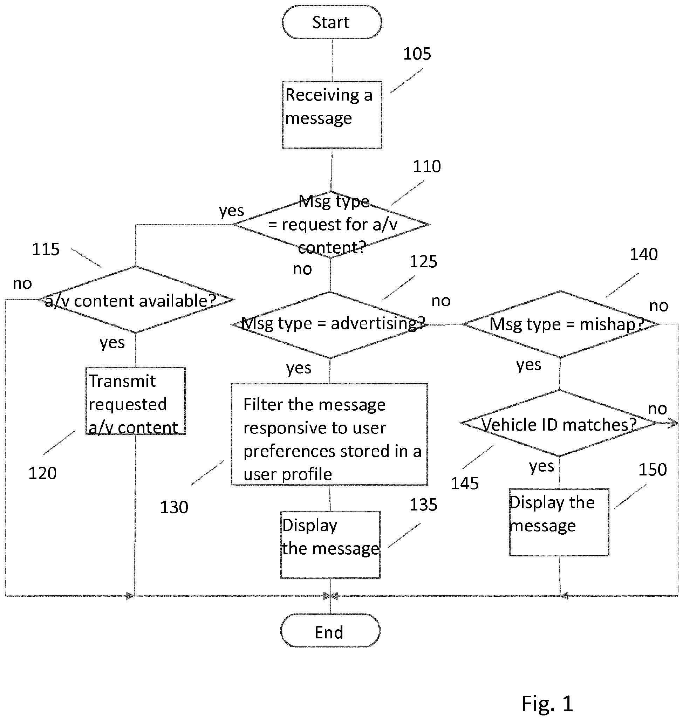

Fig. 1 is a flowchart of an exemplary embodiment of the receive side (IoT enabled vehicle receiving a message) in accordance with the principles of the proposed mechanism. At 105 a message is received by an IoT enabled vehicle. At 110 a test is performed to determine if the message type is a request for audio/video content. As described above audio content may be a piece of music or an album. Audio content may also be a "book on tape" or any other reasonable unit of audio content. If the message is a request for audio/video content, then at 115 the IoT enabled vehicle receiving the message (request) performs a test to determine if the IoT enabled vehicle has the requested content available. If the IoT enabled vehicle receiving the message (request) has the requested content available then at 120 the IoT enabled vehicle having the requested content available transmits (sends, forwards, broadcasts) the requested content. Transmission (sending, forwarding, broadcasting) is accomplished using short range broadcast communications. If the message requesting the content includes a sender or source identification then the content may be sent (transmitted, forwarded) to the source of the message requesting the content. If the message requesting the content does not include a sender or source identification then the content is broadcast and the sender or source will be able to receive the content and other IoT enabled vehicles will ignore the broadcast.

If the message type is not a request for audio/video content then at 125 a test is performed to determine if the message type is advertising. If the message type is advertising then at 130 the IoT enabled vehicle filters the message responsive to user preferences stored in a user profile. At 135 the advertisement is displayed (audio, text or video) if the genre of advertisement passes through the filter.

If the message type is neither a request for audio/video content nor an advertisement then at 140 a test is performed to determine if the message type is mishap. If the message type is mishap then at 145 a test is performed to determine if the vehicle identifier matches the IoT enabled vehicle that received the mishap message. If the vehicle identifier matches the IoT enabled vehicle that received the mishap message then at 150 the message is displayed (audio or text). If the vehicle identifier does not match the IoT enabled vehicle that received the mishap message then processing ends. If the message type is not mishap then processing ends. The vehicle identifier may be a number or a combination of numbers and letters or a combination of number, letters and special characters.

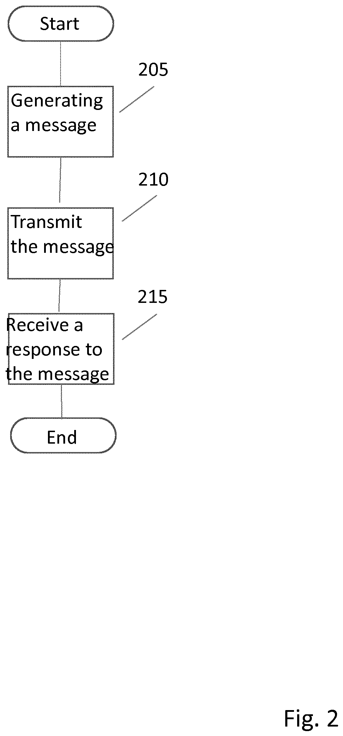

Fig. 2 is a flowchart of an exemplary embodiment of the transmit side (IoT enabled vehicle generating and transmitting an initial message) in accordance with the principles of the proposed mechanism. At 205 a user in the IoT enabled vehicle generates a message. Message generation may be by text on a navigation type screen available in the IoT enabled vehicle or a screen available on a cell phone that is connected to the IoT enabled vehicle by Bluetooth. The message may also be generated via an audio to text conversion application (app) through the IoT enabled vehicle or again through a cell phone that is connected to the IoT enabled vehicle by Bluetooth. At 210 the generated message is transmitted (sent, forwarded, broadcast) to a second IoT enabled vehicle within short range broadcast communications range of the vehicle that generated the message. At 215 the IoT enabled vehicle may receive a response to the message if the generated message is a request for audio or video content. If the generated message is an advertisement or a report of a mishap then no response is usually received. In the case of a report of a mishap the generated message will not include any indication of which IoT enabled vehicle sent (forwarded, broadcast, transmitted) the message. Similarly, in the case of an advertisement that is broadcast.

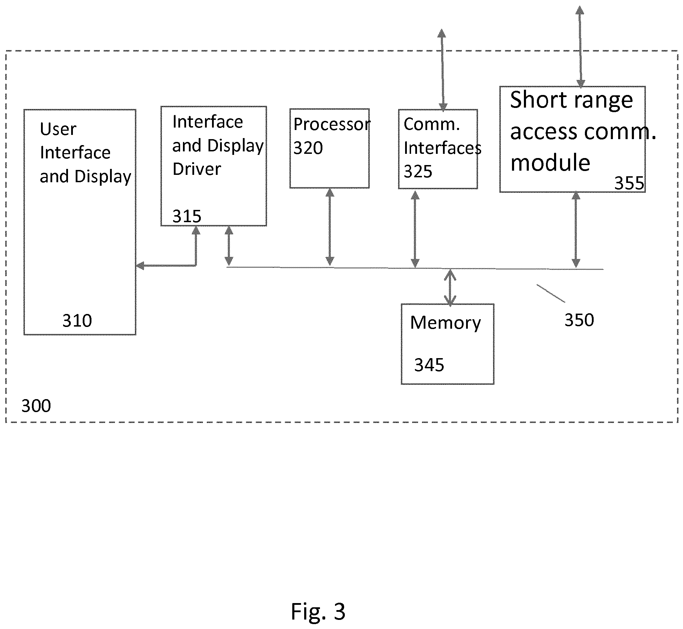

Fig. 3 is a block diagram of an exemplary embodiment of a network access device 300 for practicing the proposed method. The block diagram configuration includes a bus-oriented 350 configuration interconnecting a processor (processing unit) 320, and a memory 345. The configuration of Fig. 3 also includes a communication interface 325. The communication interface 325 may be wired or wireless and may in fact, include two interfaces - one for wired line communication and one for wireless communication. A second wireless communications module 355 is for short range access communications. The short range access communications interface 355 is in communication with the remaining components (modules) in the network access device through the bus 350. User interface and display 310 is driven by interface circuit 315. The user interface and display 310 and interface circuit 315 are not limited to "displaying" the message. As used herein displaying may actually be displaying the message on a display screen such as a navigation screen but may also include audio and in the case of video content rendering the content on a display screen available in the back seat of an IoT enabled vehicle. In the case of audio, audio prompts may be available to aid the user (driver or passengers) to generate the message or audio may be available to hear any responses. The audio may be available through the radio of the IoT enabled vehicle or through a cell phone connected through Bluetooth to the IoT enabled vehicle.

Processor 320 provides computation functions for the network access device, such as depicted in Figs. 1 or 2. The processor 320 can be any form of CPU or controller that utilizes communications between elements of the network access device to control communication and computation processes. Those of skill in the art recognize that bus 350 provides a communications path between the various elements of embodiment 300 and that other point-to-point interconnection options (e.g. non-bus architecture) are also feasible.

Any or all of the functionality included in the network access device may be embodied as application specific integrated circuits (ASICs), field programmable gate arrays (FPGAs), reduced instruction set computers (RISCs) or any other equivalent separate type of co-processor integrated into processor 320.

Memory 345 can act as a repository for memory related to any of the methods that incorporate the functionality of the network access device. Memory 345 can provide the repository for storage of information such as program memory, downloads, uploads, or scratchpad calculations. Those of skill in the art will recognize that memory 345 may be incorporated all or in part of processor 320. Communication interface 325 has both receiver and transmitter elements for wired line or wireless communications. Short range access communication module 355 has both a receiver and transmitter (or transceiver) for short range access communications as known to those of skill in the art. Program instructions for operation of the processor of the network access device may be in memory 345 or may be in processor.

The processing in accordance with the method shown in Figs. 1 and 2 is predominantly performed in the short range access communications module 355 and the processor 320. The processor performs the steps/acts of the method but the reception and transmission between the network access device 300 and the discovered short range access communications devices is through the short range access communications module 355. As described above the user interface and display 310 and the interface circuit 315 play an important role in generating the messages and in displaying (rendering) any responses where message generation or responses may be text, audio or video and the message generation may be audio to text conversion.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

For purposes of this application and the claims, using the exemplary phrase "**at least one** of A, B **and** C," the phrase means "only A, or only B, or only C, or any combination of A, B and C."

## Claims

1. A method, comprising:
receiving a short range broadcast communication message by a first Internet of Things (IoT) enabled vehicle from a user in a second IoT enabled vehicle;
determining a message type of said short range broadcast communication message and, performing an action based on said determined message type.

2. The method according to claim 1, further comprising transmitting a response in the case where it is determined that said short range broadcast communication message is a request for audio/video and said audio/video is available otherwise not transmitting a response in the case where said audio/video is unavailable.

3. The method according to claim 1 or 2, further comprising filtering said short range broadcast communication message in the case where said message type is advertising and displaying said short range broadcast communication message responsive to results of said filtering, wherein said filtering is performed responsive to user preferences stored in a user profile.

4. The method according to any preceding claim, further comprising:
determining if a vehicle identifier in said short range broadcast communication message matches a vehicle identifier of said first vehicle;
determining if said message type is mishap; and
displaying said short range broadcast communication message responsive to said second and said third determinations.

5. A method, comprising:
generating a short range multicast communication message by an Internet of Things (IoT) enabled vehicle; and
transmitting said generated short range multicast communication message to at least one other IoT enabled vehicle or a gateway.

6. An apparatus, comprising:
means for generating a short range multicast communication message by a vehicle; and
means for transmitting said generated short range broadcast communication message to at least one other vehicle or a gateway.

7. The method according to claim 5 or apparatus according to claim 6, wherein said generating said short range multicast communication message includes at least one of generating a text message, generating a voice message and generating a voice to text message.

8. The method according to claim 5 or 7, or the apparatus of claim 6 or 7, wherein said short range multicast communication message is one of a request for audio or video content, advertising or a mishap type.

9. The method according to any one of claims 5 and 7 to 8, or the apparatus of any one of claims 6 to 8, wherein said transmission of the short range multicast communication message is a short range broadcast communications.

10. The method according to any one of claims 5 and 7 to 9 or the apparatus according to any one of claims 6 to 9, further comprising receiving a response to said generated short range multicast communication message, said response being said audio/video content.

11. An apparatus, comprising:
means for receiving a short range broadcast communication message by a first Internet of Things (IoT) enabled vehicle from a user in a second IoT enabled vehicle;
means for determining a message type of said short range broadcast communication message, and means for performing an action based on said determined message type.

12. The apparatus according to claim 11, further comprising means for transmitting a response in the case where said short range broadcast communication message is a request for audio/video and said audio/video is available otherwise not transmitting a response to said short range broadcast communication message if said audio/video is unavailable.

13. The apparatus according to claim 11 or 12, further comprising means for filtering said short range broadcast communication message if said message type is advertising and displaying said short range broadcast communication message responsive to results of said filtering, wherein said filtering is performed responsive to user preferences stored in a user profile.

14. The apparatus according to any one of claims 11 to 13, further comprising:
means for determining if a vehicle identifier in said short range broadcast communication message matches a vehicle identifier of said first vehicle;
means for determining if said message type is mishap; and
means for displaying said short range broadcast communication message responsive to said second and said third determinations.

15. A computer-readable medium comprising instructions which, when executed by a computer, cause the computer to carry out the method of any one of claim 1 to 5 and 7 to 10.
